# EUROPEAN PATENT APPLICATION

(11) **EP 4 397 980 A1**
(43) Date of publication of application: **10.07.2024**
(21) Application number: 22863606.4
(22) Date of filing: 02.09.2022
(51) Int. Cl.: G01Q 30/04, G01Q 70/00, G01Q 10/00

(54) **PROBE DEVICE, AND PROBE CONTROL APPARATUS AND METHOD**

(30) Priority: 03.09.2021 CN 202111033230; 09.09.2021 CN 202111054914
(71) Applicant: Parcan NanoTech Co., Ltd., Shanghai 201821 (CN)
(72) Inventor: ZHOU, Xiangqian, Shanghai 201821 (CN); RANGELOW, Ivo, 34225 Baunatal (DE)
(74) Representative: Viering, Jentschura & Partner mbB Patent- und Rechtsanwälte
(86) International application number: PCT/CN2022/116660
(87) International publication number: WO 2023/030472

(57) **Abstract**

Embodiments of the present application provide a probe device, probe control equipment and methods, which relate to the technical field of probe control. The probe device includes: multiple probes and a coding and decoding device; the coding and decoding device is used to decode the received probe control signals sent by the control processing system, and send the decoded probe control signals to the corresponding probes respectively; The probe is used to operate the surface to be operated in accordance with the received probe control signal, and to send the obtained probe data signal to the coding and decoding device; The coding and decoding device is further used to encode the probe data signal of each probe and send the encoded data signal of each probe to the control processing system. In the present application, a coding and decoding device can be utilized to use a bus for high-speed transmission of data signals between the probe device and the control processing system, which enables the multi-probe probe device to carry out a high-speed operation mode, and helps to improve the measurement and lithography speed of the probe device.

## Description

### Cross-references to related applications

This patent application claims priorities to the Chinese patent application No. 202111033230.4 filed on September 3, 2021, and entitled "Probe Device, Probe Control Equipment and Method", and the Chinese patent application No. 202111054914.2 filed on September 9, 2021, and entitled "Probe Device, Probe Control Equipment and Method", which are incorporated herein by reference in their entireties.

### Technical field

The present application relates to the field of probe control technology, and specifically to a probe device, probe control equipment and method.

### Background technique

The measurement and imaging of surface physical and chemical properties in the micro-nano field is a quite common technology for scientific research and industrial application. Its importance is self-evident. However, how to perform measurements quickly and accurately is always a challenge.

Especially in the chip industry, manufacturing chips with a 5-nanometer technology node has been realized, and chips with a 3-nanometer technology node have been successfully developed. However, the measurement technology of the chip industry lags far behind. Not only are the detection methods insufficient, but the speed of reaching nanometer-scale surface measurements is often very slow, which cannot meet the demand of online detection or even random inspection of the chip industry.

Existing optical ellipsometry detection technology can detect the three-dimensional structure of the wafer surface with a vertical resolution of less than 1 nm and is fast enough to be used for on-line inspection, but the lateral resolution still stays in the order of submicrometer level, which is not able to satisfy the requirement of measurement resolution.

Scanning Probe Microscope (SPM) can measure sub-nanometer vertical and lateral resolution, especially 3D structures from a few nanometers to tens of nanometers. However, its measurement speed is slow, and it has been estimated that a complete measurement of dies on a wafer takes at least 30 days. One of the main reasons for the slow measurement speed is that the probe must be only a few nanometers to tens of nanometers away from the surface to measure the nanoscale three-dimensional topography. To avoid the probe colliding with the three-dimensional structure of the surface to be measured and affecting the measurement accuracy, the probe must travel at an extremely slow speed during the measurement process.

Probe technology can be used to measure physical quantities, such as surface conductivity, surface photoresist residue, distribution of different components on the surface, etc.

The probe head of the probe is extremely thin, with a radius of curvature of only 2 nanometers, and even only one atom on the tip. Applying a very small voltage to the probe, such as 50V, can cause a very high electric field strength on the tip of the probe. At this time, electrons on the tip of the probe are easily pulled out, forming an electric field emission on the tip of the probe. The use of probe tip formation of electric field emission of electrons can be sensitized to resist formation of electron beam lithography, also called scanning probe lithography (SPL).

The advantage of scanning probe lithography is that the lithographic lines are very fine, making it ideal for exposing single nanometer fine line structures. The reason is not only that the tip of the very small probe emits electrons to form a single nanometer-scale electron beam spot, but also that the energy of the emitted electrons is very low, making it difficult to form a major problem in electron beam lithography, namely the proximity effect. Since there is almost no proximity effect, the problem of broadening of the exposed area after electron beam exposure is eliminated. As a result, the size of the probe electron beam directly determines the photosensitive area of the resist, forming a single nanometer-scale lithography line width.

However, the problem with probe tip electron beam lithography is that the probe tip needs to be moved point by point and electron beam exposure is performed at each point. The moving speed of the probe is far slower than the electron beam scanning speed of conventional electron beam lithography machines, making the speed of probe lithography very low and unable to complete large-area lithography within a limited time.

The solution to address the speed of scanning probe lithography is to set up multi-probe arrays, allowing the multi-probes to perform lithography operations simultaneously to achieve higher speeds. As the multi-probes surface topography measurement requires high speed, high-speed collection of probe data and high-speed feedback of control signals to each probe, multi-probe high-speed lithography also encounters the problem of high-speed data acquisition and control signals high-speed feedback to the probe problem, the same problem of large data transmission and processing.

Multi-probe lithography systems are more important for high-speed data acquisition and high-speed feedback of control signals, because the time required for a single-point exposure of the probe electron beam is potentially very long due to the number of electrons that need to be accumulated, which can result in a longer overall time for exposing the entire pattern, making the use of multi-probes for lithography even more necessary.

Perforating the tip of the probe allows ions to be introduced into the sample surface through the holes in the probe for ion implantation. Through nanoscale positioning of the probe, nanoscale spatial positioning of ion implantation is achieved. This enables precise single-ion doping and the manufacture of single-doped electronic devices and integrated circuits.

In summary, the probe's measurement of the sample surface, electron field emission, and guided ion implantation can be called operations on the sample. Examples of their operations are summarized as:
a. The probe measures the surface and senses the physical and chemical parameters of the surface. Examples of measurement signals are three-dimensional topography, surface roughness, surface conductivity, surface composition, surface temperature, surface hardness, surface modulus of elasticity, surface emission, surface luminescence, and surface Raman signal;
b. The probe emits electrons to the surface. The emitted electrons sensitize the surface material, creating photoresist sensitizing properties and creating a photolithographic effect;
c. Surface electrons and photons generated by probe excitation;
d. Directing ions to the surface by means of a probe enables ions to be injected into the surface.

The probes used can in principle be categorized as passive and active probes. In all these probes the probe cantilever beam or integrated probe drive elements and probe signal sensing elements are integrated. However, the device consisting of these elements is only suitable for the mode of operation of a single probe and not for the mode of operation of many probes together. So far, there is no solution that can realize the working mode of multi-feature arrays. The inability to integrate multiple probes together means that the technology invented so far has not achieved the multi-probe mode of operation, i.e., it has not achieved the mode of generating multiple probes operating at high speed.

In above description, high speed is required in both the measurement of the sample surface using probes, electron field emission, and guided ion implantation, and how to integrate many probe units to form a parallel measurement system is the key to improving the measurement speed. Therefore, to solve the above technical problems, the inventor has proposed the technical solution of the present application.

### Content of the invention

The purpose of this application is to provide a probe device, a probe control equipment and a method, which realize a multi-probe to operate and to process the surface to be operated in parallel, and incorporates a coding and decoding device in the probe device, so that the coding and decoding device can be utilized for high-speed transmission of data signals by using a bus for high-speed transmission of data signals between the probe device and the control and processing system, so that the multi-probe probe device can be capable of carrying out a high-speed operation mode, which can help to increase the speed of the probe device's measurement and photolithography; At the same time, the number of leads between the probe device and the control processing system is reduced, making the connection between the probe device and the control processing system simpler.

To achieve the above purpose, the present application provides a probe device comprising: a plurality of probes, a coding and decoding device; signal outputs of the probes are connected to coding inputs of the coding and decoding device, respectively, signal inputs of the probes are connected to decoding outputs of the coding and decoding device, respectively, and the coding outputs and the decoding inputs of the coding and decoding device are connected to a control processing system; the coding and decoding device is used to decode the probe control signals received from the control processing system and send the decoded probe control signals to the corresponding probes respectively; the probes are used to operate and process a surface to be operated according to the probe control signals received and send obtained probe data signals to the coding and decoding device; the coding and decoding device is further used to encode the probe data signals of the probes and send the encoded data signals of the probes to the control processing system.

The present application also provides a probe control equipment comprising: a probe device as described above, and a control processing system connected to the probe device.

The present application also provides a probe control method applied to a probe control equipment, the probe control equipment comprising a probe device, and a control processing system connected to the probe device; the method comprising: the control processing system generates probe control signals based on control parameters input from a user side and sends the probe control signals to the probe device; the probe device decodes the received probe control signals, and controls probes in the probe device to operate and process a surface to be operated according to the decoded probe control signals, and obtains probe data signals; the probe device encodes the probe data signals of the probes and sends the encoded data signals of the probes to the control processing system; the control processing system operates and processes the received encoded probe data signals and outputs data processing results.

In an embodiment of the present application, the probe device includes a plurality of probes and a coding and decoding device, and when the surface to be operated is subjected to an operation processing operation, the control processing system sends the probe control signals to the coding and decoding device of the probe device, the coding and decoding device decodes the received probe control signals, and sends the decoded probe control signals to the corresponding probes, respectively, each probe then operates and processes the surface to be operated according to the received probe control signal, and sends the obtained probe data signal to the coding and decoding device, the coding and decoding device then encodes the probe data signal of each probe and sends the encoded probe data signal to the control processing system, thus realizing that multiple probes operate and process the surface to be operated in parallel, the coding and decoding device is incorporated in the probe device so that the coding and decoding device can be utilized for high-speed transmission of data signals between the probe device and the control processing system using a bus, enabling the probe device with multiple probes to carry out a high-speed mode of operation, which contributes to the improvement of the measurement and lithography speed of the probe device; at the same time, the number of lead wires between the probe device and the control processing system is reduced, making the connection between the probe device and the control processing system simpler.

In one embodiment, the coding and decoding device comprises: a plurality of coding and decoding units; the plurality of probes form a plurality of probe surface operating units, each of the probe surface operating units comprises at least one of the probes, and each of the probe surface operating units is corresponding to one of the coding and decoding units; the signal outputs of the probes in the probe surface operating units are connected to encoding inputs of the corresponding coding and decoding units, the signal inputs of the probes in the probe operating units are connected to decoding outputs of the corresponding coding and decoding units, the encoding outputs of the coding and decoding units are connected to the control processing system, and the decoding inputs of the coding and decoding units are connected to the control processing system; the coding and decoding units are used to decode the received probe control signals sent by the control processing system and send the decoded probe control signals to the probes of the corresponding probe operating units; the probes are used to operate and process the surface to be operated according to the received probe control signals and send the obtained probe data signals to the encoding and decoding units connected thereto; the coding and decoding units are further used to encode the received probe data signals sent by the probes and send the encoded probe data signals to the control processing system.

In one embodiment, the coding and decoding device comprises a plurality of coding and decoding units, the number of the coding and decoding units being equal to the number of the probes, the coding and decoding units correspond one-to-one with the probes; the signal outputs of the probes are connected to encoding inputs of the corresponding coding and decoding units, the signal inputs of the probes are connected to decoding outputs of the corresponding coding and decoding units, the encoding outputs of the coding and decoding units are connected to the control processing system, and the decoding inputs of the coding and decoding units are connected to the control processing system; the coding and decoding units are used to decode the received probe control signals sent by the control processing system and send the decoded probe control signals to the probes connected thereto; the probes are used to operate and process the surface to be operated according to the received probe control signals and send the obtained probe data signals to the coding and decoding units connected thereto; the coding and decoding units are used to encode the received probe data signals sent by the probes and send the encoded probe data signals to the control processing system.

In one embodiment, the coding and decoding device comprises a coding and decoding unit; the signal outputs of the probes are each connected to encoding inputs of the coding and decoding unit, the signal inputs of the probes are each connected to decoding outputs of the coding and decoding unit, the encoding outputs of the coding and decoding unit are connected to the control processing system, and the decoding inputs of the coding and decoding unit are connected to the control processing system; the coding and decoding unit is used to decode the received probe control signals sent by the control processing system and send the decoded probe control signals to the corresponding probes; the probes are used to operate and process the surface to be operated according to the received probe control signals and send the obtained probe data signals to the coding and decoding unit connected thereto; the coding and decoding unit are used to encode the received probe data signals sent by the probes and send the encoded probe data signals to the control processing system.

In one embodiment, each the coding and decoding unit comprises: an encoder and a decoder; an input of the encoder forms the encoding input of the coding and decoding unit, an output of the encoder forms the encoding output of the coding and decoding unit, an input of the decoder forms the decoding input of the coding and decoding unit, an output of the decoder forms the decoding output of the coding and decoding unit; the decoder is used to decode the received probe control signals sent by the control processing system and send the decoded probe control signals to the probes connected thereto; the probes are used to operate and process the surface to be operated according to the received probe control signals and send the obtained probe data signals to the encoder connected thereto; the encoder is used to encode the received probe data signals sent by the probe and send the encoded probe data signal to the control processing system.

In one embodiment, each of the probes comprises: a probe head, a cantilever beam, and a probe tip, in each of the probes, the probe tip is provided on a tip portion of the probe head, the probe head is fixed to one end of the cantilever beam, an end of the cantilever beam away from the probe head is connected to the input of the encoder and the output of the decoder, respectively; the probe is used to control the probe tip to operate and process the surface to be operated according to the received probe control signals.

In one embodiment, the number of the coding and decoding units is equal to the number of the probes, the coding and decoding units correspond one-to-one with the probes; the encoder and the decoder in each of the coding and decoding units is fixed to the end of the cantilever beam away from the probe head of the corresponding probes and is communicatively connected to the cantilever beam.

In one embodiment, the number of the coding and decoding units is equal to the number of the probes, the coding and decoding units correspond one-to-one with the probes; the encoder and the decoder in each of the coding and decoding units are integrated at the end of the cantilever beam of the corresponding probes away from the probe head, and communicatively connected to the cantilever beam.

In one embodiment, the probes operate and process the surface to be operated in a manner comprising any one or any combination of the following:
measuring of physical and chemical quantities of the surface to be operated, photoetching of emitted electrons of the surface to be operated, generation of electrons, generation of photons, ion implantation of the surface to be operated.

In one embodiment, the probe device further comprises: a first bus and a second bus; the encoding output of the coding and decoding device is connected to the control processing system via the first bus, and the decoding input of the coding and decoding device is connected to the control processing system via the second bus; the encoding and decoding device is used to decode the probe control signals sent by the control processing system received via the second bus; the coding and decoding device is used to encode the probe data signals of the probes and send the encoded data signals of the probes to the control processing system via the first bus.

In one embodiment, the probe device further comprises: N third buses and M fourth buses; N is an integer greater than 1, M is an integer greater than 1; the encoding output of the coding and decoding device is connected to the control processing system via the N third buses, and the decoding input of the coding and decoding device is connected to the control processing system via the M fourth buses; each of the probe control signals comprises M sub control signals, and each of the probe data signals of the probes comprises N sub data signals; the coding and decoding device is used to receive the M sub control signals through the M fourth buses respectively, decode the sub control signals, and send the decoded M sub control signals to the corresponding probes; the probe is used to operate and process the surface to be operated according to the decoded sub control signals and send the obtained N sub data signals to the coding and decoding device; the coding and decoding device is used to receive the N sub data signals sent by the probe via the N third buses, encode the N sub data signals, and send the encoded sub data signals to the control processing system via the corresponding third buses, respectively.

In one embodiment, the probe device further comprises: a probe holder; the plurality of probes are disposed on the probe holder, the coding and decoding device is fixed to the probe holder or the ends of the probes.

In one embodiment, the coding and decoding device is formed by microfabrication on the probe holder or the ends of the probes.

In one embodiment, the control processing system comprises: an internal coding and decoding device and an internal data processing device; the coding and decoding device is connected to the probe device, the internal data processing device is connected to the coding and decoding device; the internal data processing device is used to generate the probe control signals according to the control parameters input from the user side; the internal coding and decoding device is used to encode the probe control signals and send the encoded probe control signals to the probe device; the internal coding and decoding device is further used to decode the received probe data signals and send the decoded probe data signals to the internal data processing device; the internal data processing device is further used to operate an process the decoded probe data signals and output the data processing results.

In one embodiment, the internal data processing device comprises a processing unit of a L-layer structure; a first layer of the internal data processing device comprises a plurality of processing units, and a layer L comprises one processing unit, and each processing unit in the current layer is correspondingly connected to a plurality of processing units in the next layer; the internal coding and decoding device comprises a plurality of internal coding and decoding units, the internal coding and decoding units is connected one-to-one with the first processing unit; the processing unit in the first layer corresponds to at least one probe of the probe device, L is an integer greater than 1; the internal data processing unit is used to generate probe control signals of the probes by receiving the control parameters input by the user side via the processing unit in layer L; the internal data processing unit is used to send the probe control signals of the probes to the processing unit of the first layer based on the processing unit of the L-layer structure and to the corresponding probes in the probe device via the internal encoding and decoding unit; the internal data processing unit is used to receive the probe data signals of the corresponding probes via the internal encoding and decoding unit; the internal data processing device is used to operate and process the probe datas of the probes based on the processing unit of the L-layer structure and output the data processing results via the processing unit of the layer L.

In one embodiment, the internal data processing device comprises a processing unit of a three-layer structure; a first layer of the internal data processing device comprises a plurality of first processing units, a second layer comprises a plurality of second processing units, and a third layer comprises a third processing unit; the internal coding and decoding unit is connected one-to-one with the first processing units; each of the first processing units corresponds to at least one of the probes in the probe device; the third processing units are used to generate the probe control signals based on the control parameters input from the user side, and send to target processing units via the second processing units; the target processing units are the first processing units corresponding to the second processing units; the first processing units are used to send the received control signals of the probes to the corresponding probes in the probe device via the corresponding internal coding and decoding unit; the first processing units are further used to operate and process the probe data signals received from the corresponding probe via the corresponding internal coding and decoding unit, and send the obtained processing results to the third processing units via the second processing units; the third processing units are used to output the data processing results based on the received processing results corresponding to the probe data signals.

### Description of the drawings

FIG. 1 is a schematic diagram of a probe device connected to a control processing system according to a first embodiment of the present application;
FIG.2 is a schematic diagram of a probe device connected to a control processing system according to a first embodiment of the present application, wherein the probe device further comprises a probe holder;
FIGs.3 to 6 are schematic diagrams of a probe device connected to a control processing system according to a second embodiment of the present application;
FIGs.7 to 10 are schematic diagrams of a probe device connected to a control processing system according to a third embodiment of the present application;
FIGs.11 and 12 are schematic diagrams of a probe according to a third embodiment of the present application;
FIGs.13 to 16 are schematic diagrams of an arrangement of a probe, an encoder and a decoder according to a third embodiment of the present application;
FIGs.17 and 18 are schematic diagrams of a probe device connected to a control processing system according to a fourth embodiment of the present application;
FIG. 19 is a schematic diagram of a probe control equipment according to a sixth embodiment of the present application;
FIGs.20 and 21 are schematic diagrams of a probe control equipment according to a seventh embodiment of the present application;
FIG.22 is a specific flowchart of a probe control method according to an eighth embodiment of the present application.

### concrete implementation

Each embodiment of the present application will be described in detail in the following in connection with the accompanying drawings, so that the purposes, features and advantages of the present application can be more clearly understood. The embodiments shown in the accompanying drawings are not intended to be a limitation of the scope of the present application but are merely intended to illustrate the substantive spirit of the technical solution of the present application.

In the following description, for the purpose of explaining the various disclosed embodiments, certain specific details are set forth to provide a thorough understanding of the various disclosed embodiments. However, one skilled in the relevant art will recognize that the embodiments may be practiced without one or more of these specific details. In other instances, well-known devices, structures, and techniques associated with the present application may not be shown or described in detail to avoid unnecessarily obscuring the description of the embodiments.

Unless the context requires otherwise, throughout the specification and claims, the word "comprises" and variations thereof, such as "includes" and "has" should be understood in an open, inclusive sense, that is, to mean "includes, but not limited to".

Reference throughout this specification to "one embodiment" or "an embodiment" means that a particular feature, structure, or characteristic described in connection with the embodiment is included in at least one embodiment. Thus, the appearances of "in one embodiment" or "in an embodiment" in various places throughout this specification are not necessarily all referring to the same embodiment. Additionally, specific features, structures, or characteristics may be combined in any manner in one or more embodiments.

As used in this specification and the appended claims, the singular forms "a," "an" and "" include plural referents unless the context clearly dictates otherwise. It should be noted that the term "or" is generally used in its sense including "or/and" unless the context clearly dictates otherwise.

In the following description, in order to clearly demonstrate the structure and working mode of this application, many directional words will be used to describe it, but "front", "back", "left", "right", "outside", "inside" should be used. ", "outward", "inward", "up", "down" and other words are to be understood as convenient terms and should not be understood as limiting terms.

A first embodiment of the present application relates to a probe device, wherein the probe device is used to operate and process a surface of a wafer to be operated, and the processing on the surface of the wafer to be operated comprise: measurements of physical and chemical quantities on the surface of the wafer to be operated, scanning probe lithography (SPL), generation of electrons, generation of photons, and introduction of ions into the surface of the wafer to be operated by means of the probe to perform ionization of the surface to be operated, etc. The related physical and chemical quantities include, but are not limited to, electrical, mechanical, magnetic, optical, acoustic, and compositional information, such as three-dimensional topography, surface roughness, surface conductivity, surface composition, surface temperature, surface hardness, surface modulus, surface emission, surface luminescence, and surface Raman signal; Scanning probe lithography is that: the voltage (e.g., 50V) is applied to the probe, and a electric field with a high electric field strength is formed on the probe tip of the probe, at this time, the electrons on the probe tip can easily be pulled out, and forming the electric field emission of the probe head of the probe, thus using the electrons emitted by the electric field formed on the probe tip of the probe to sense the photoresist to form a e-beam lithography,the electrons emitted by the probe can generate the secondary electrons on the surface to be operated.

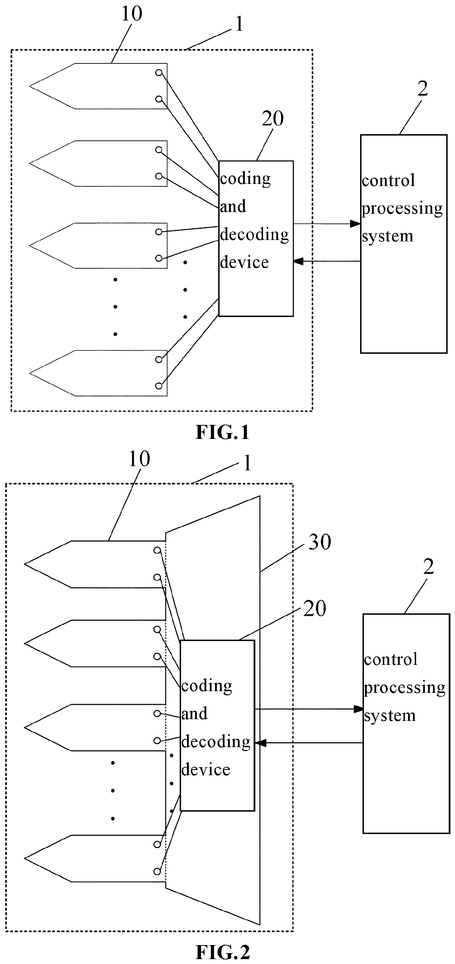

Referring to FIG. 1, the probe device 1 includes a plurality of probes 10 and a coding and decoding device 20, the signal output of the probes 10 is connected to the coding input of the coding and decoding device 20, the signal input of the probes 10 is connected to the decoding output of the coding and decoding device 20, and the coding output of the coding and decoding device 20 and the decoding input of the coding and decoding device 20 are respectively connected to the control processing system 2.

The coding and decoding device 20 is used to decode the received probe control signals sent by the control processing system 2 and send the decoded probe control signals to the corresponding probes 10, respectively. Specifically, the control processing system 2 generates the probe control signals based on the control parameters input from the user side after receiving the control parameters, and sends the generated probe control signals to the coding and decoding device 20 of the probe device 1, the probe control signals are used for controlling the respective probes 10 in the probe device 1 to carry out processing such as the measurement of the physical and chemical quantities on the surface of the wafer to be operated, the scanning probe lithography (SPL) operation, as well as the ion implantation operation, etc.; wherein the control parameters input by the user include, but are not limited to: calculation control parameters, measurement mode of the probe , emission electronic mode of the probe, measurement range of the probe, measurement speed of the probe, vibration frequency of the probe, encoding frequency, and decoding frequency, etc..

After receiving the probe control signals, the coding and decoding device 20 decodes the probe control signals and sends the decoded probe control signals to the corresponding probes 10 to control the probes 10 to perform the corresponding processing of the wafer to be operated surface.

The probe 10 is used to operate and process the surface to be operated according to the received probe control signal, and send the obtained probe data signal to the coding and decoding device 20. Specifically, taking any one of the probes 10 as an example, the operating parameters of the probe 10 are set in the corresponding decoded probe control signal received therein, such as operating modes, operating ranges, etc., the probe 10 can operate and process the surface to be operated based on this probe control signal,to obtain a probe data signal and send the probe data signal to the coding and decoding device 20. Wherein the probe data signal of the probe 10 includes but is not limited to: data including a force signal in the longitudinal direction of the probe, a spatial probe position signal, speed data of the probe, vibration frequency data of the probe, temperature data of the probe, code or address data of the probe, and so on.

The coding and decoding device 20 is further used to encode the probe data signal of each probe 10 and send the encoded data signal of each probe to the control processing system 2. Specifically, the coding and decoding device 20, upon receiving the probe data signal sent by each probe 10, encodes the probe data signal using the encoding method corresponding to the probe 10, and sends the encoded probe data signal to the control processing system 2, where the control processing system 2 carries out the corresponding decoding processing of the encoded probe data signal of the respective probes 10, so as to be able to obtain the probe data signal of the respective probes 10, and carry out the operation processing of the probe data signal of the respective probes 10 to obtain the data processing results and to output them.

Exemplarily, the coding and decoding device 20, upon establishing the correspondence between the probe 10 and the probe data signal, may set different probes 10 to correspond to different resonance frequencies, i.e., the established one-to-one correspondence between the probe 10 and the resonance frequency, the resonance frequency is included in the probe data signal, so that the coding and decoding device 20 may determine the probe 10 from which the probe data signal originates by reading the resonance frequency in the probe data signal.

In one example, referring to FIG. 2, the probe device 1 further comprises: a probe holder 30; a plurality of probes 10 are disposed on the probe holder 30, and a coding and decoding device 20 is fixed to the probe holder 30 or the ends of the probes 10 (as an example in the figure, the coding and decoding device 20 is fixed to the probe holder 30). wherein the plurality of probes 10 are formed on the probe holder 30 by means of machining, the coding and decoding device 20 may be fabricated directly on the probe holder 30 or on the ends of the probes 10 using microfabrication techniques, and the coding and decoding device 20 is connected to the respective probes 10 by means of connecting wires; alternatively, a plurality of probes 10 are formed on the probe holder 30 by machining, the coding and decoding device 20 is fabricated into a chip module and then fixed to the probe holder 30 by means of patch, and the coding and decoding device 20 is connected to the probes 10 by means of a connecting wire. As a result, it is possible to integrate the plurality of probes 10, the coding and decoding device 20, and the probe holder 30 to form a robust probe structure.

It should be noted that this embodiment and subsequent embodiments only schematically give the number and arrangement of the plurality of probes, the number of probes and the arrangement of the probes can be set in accordance with the requirement of the processing of the surface to be operated, for example, the plurality of probes can be used in a single-row arrangement, or can be used in an array of arrangements.

This embodiment provides a probe device, the probe device comprising a plurality of probes and a coding and decoding device, wherein, when an operation processing operation is performed on a surface to be operated, the control processing system sends a probe control signal to a coding and decoding device of the probe device, and the coding and decoding device decodes the received probe control signal, and the decoded probe control signal is sent to the corresponding probe respectively, each probe is then operated according to the received probe control signal to be operated on the surface to be operated, and the obtained probe data signal is sent to the coding and decoding device, the coding and decoding device is then encoded to the probe data signal of each probe respectively, and the encoded probe data signal is sent to the control processing system, thus realizing that the plurality of probes operate and process the surface to be operated in parallel, the coding and decoding device is incorporated in the probe devices, so that the coding and decoding device can be used for a high-speed transmission of data signals between the probe device and the control and processing system by a bus enbling the probe device with multiple probes to be in high-speed operating mode, which will help to improve the measurement and lithography speed of the probe device; at the same time, the number of lead wires between the probe device and the control processing system is reduced, making the connection between the probe device and the control processing system simpler.

A second embodiment of the present application relates to a probe device, compared to the first embodiment, this embodiment provides a specific setting mode of the probe 10 and the coding and decoding device 20 in the probe device 1. It should be noted that the present embodiment is illustrated with the example of the coding and decoding device 20 being fixed to the probe holder 30 in the probe device 1.

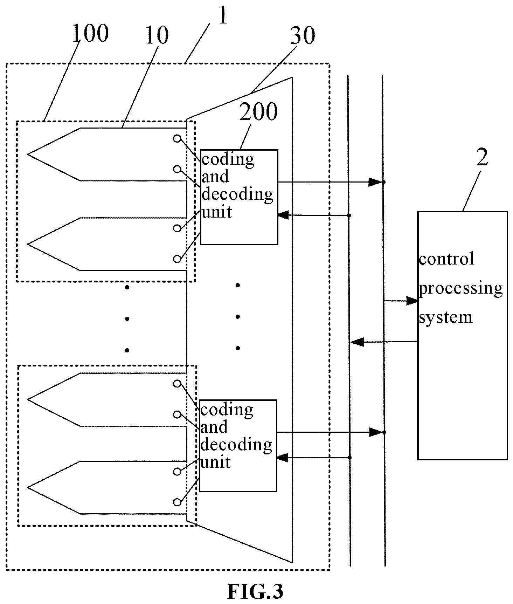

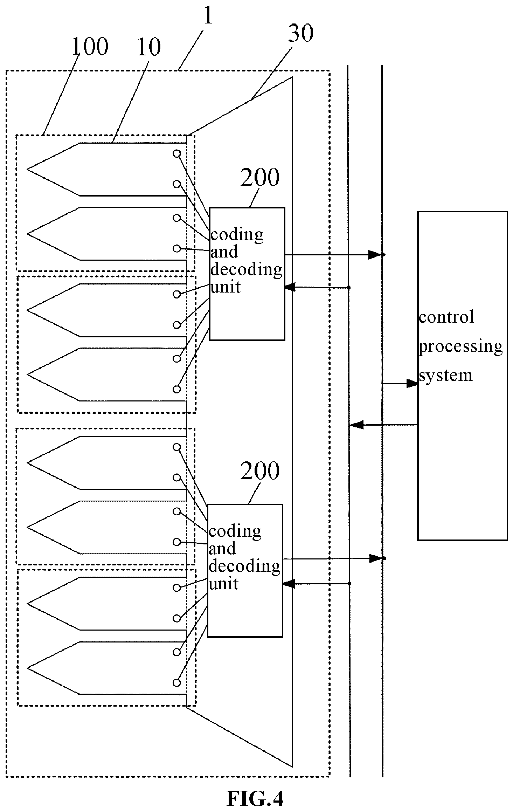

This embodiment provides three setting modes of the probe 10 and the coding and decoding device 20 in the probe device 1, specifically as following:
Mode one, referring to FIGs.3 and 4, the coding and decoding device 20 comprises: a plurality of coding and decoding units 200; a plurality of probes 10 form a plurality of probe operating units 100, each of the probe operating units 100 comprises at least one of the probes 10, each of the probe operating units 100 corresponds to one of the coding and decoding units 200.

The signal output of the probe 10 in the probe operating unit 100 is connected to the encoding input of the corresponding coding and decoding unit 200, the signal input of the probe 10 in the probe operating unit 100 is connected to the decoding output of the corresponding coding and decoding unit 200, the encoding output of the coding and decoding unit 200 is connected to the control processing system 2, and the decoding input of the coding and decoding unit 200 is connected to the control processing system 2.

The coding and decoding unit 200 is used to decode the received probe control signal sent by the control processing system 2 and send the decoded probe control signal to the probe of the corresponding probe operating unit 100.

The probe 10 is used to operate and process the surface to be operated according to the received probe control signal, and send the obtained probe data signal to the coding and decoding unit 200 connected thereto.

The coding and decoding unit 200 is also used to encode the received probe data signal sent by the probe 10 and send the encoded probe data signal to the control processing system 2.

In this embodiment, each coding and decoding unit 200 may correspond to one or more probe operating units 100, and in FIG. 3 (FIG. 3 includes 2 probes 10 for each probe operating unit 100 as an example), each coding and decoding unit 200 corresponds to a probe operating unit 100, and the coding and decoding unit 200 corresponds one-to-one with and is connected to the probe operating unit 100. For each coding and decoding unit 200, the coding and decoding unit 200 will only decode the probe control signals sent by the control processing system 2 and corresponding to the respective probes 10 in the probe operating unit 100 that is correspondingly connected to itself, and send the decoded probe control signals to the corresponding probes 10 in the probe operating unit 100 respectively; similarly, the coding and decoding unit 200 encodes only the probe data signals of the respective probes 10 in the correspondingly connected probe operating unit 100.

In FIG. 4 (in which the number of probes 10 is eight, each probe operating unit 100 includes two probes 10, and each coding and decoding unit 200 corresponds to two probe operating units 100, for example), each coding and decoding unit 200 corresponds to a plurality of probe operating units 100, and each coding and decoding unit 200 is connected to the corresponding probe operating unit 100, respectively. For each coding and decoding unit 200, the coding and decoding unit 200 decodes the probe control signals sent by the control processing system 2 and corresponding to the respective probes 10 in the plurality of probe operating units 100 correspondingly connected to itself , and sends the decoded probe control signals to the corresponding probes 10 in the probe operating units 100 respectively; similarly, the coding and decoding unit 200 encodes the probe data signals of the respective probes 10 in the correspondingly connected plurality of probe operating units 100.

In Mode one, each coding and decoding unit 200 is capable of accomplishing data signal transmission processing with the plurality of probes 10, balancing the data signal transmission processing with the size and cost of the coding and decoding unit 200.

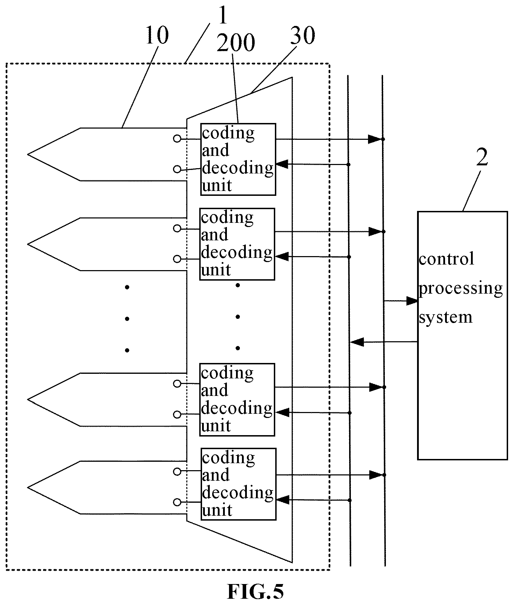

In Mode two, referring to FIG. 5, the coding and decoding device 20 comprises: a plurality of coding and decoding units 200, the number of coding and decoding units 200 is equal to the number of probes 10, and the coding and decoding units 200 are one-to-one corresponding to the probes 10, which is suitable for application scenarios where the number of probes 10 is large.

The signal output of the probe 10 is connected to the encoding input of the corresponding coding and decoding unit 200, the signal input of the probe 10 is connected to the decoding output of the corresponding coding and decoding unit 200, the encoding output of each coding and decoding unit 200 is connected to the control processing system 2, and the decoding input of each coding and decoding unit 200 is connected to the control processing system 2.

The coding and decoding unit 200 is used to decode the received probe control signals sent by the control processing system 2 and send the decoded probe control signals to the connected probes 10. Specifically, each coding and decoding unit 200 decodes only the probe control signals corresponding to the probes 10 connected thereto and sends them to the connected probes 10, to control the probes 10 to carry out the corresponding processing of the surface to be operated.

The probe 10 is used to operate and process the surface to be operated in accordance with the received probe control signal, and send the obtained probe data signal to the coding and decoding unit 200 connected thereto.

The coding and decoding unit 200 is used to encode the received probe data signals sent by the probes and send the encoded probe data signals to the control processing system 2. Specifically, each coding and decoding unit 200 encodes only the probe data signals sent by the probes 10 connected thereto and sends the encoded probe data signals to the control processing system 2.

In Mode two, a coding and decoding unit 20 is provided for each probe 10 for data signal transmission and processing, maximizing the data signal transmission and processing speed, which helps to further improve the measurement and lithography speed of the probe device 1.

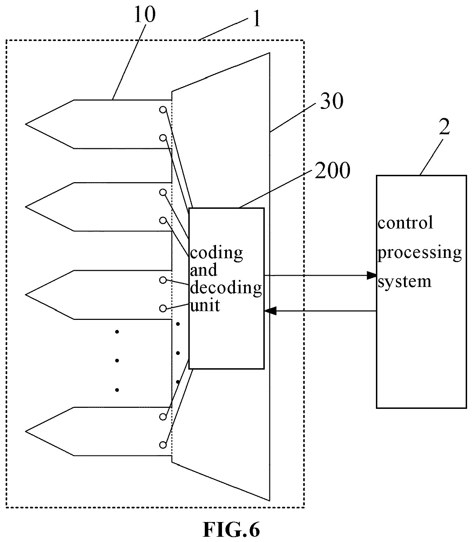

In Mode three, referring to FIG. 6, the coding and decoding device 20 comprises: a coding and decoding unit 200; the signal output of each probe 10 is connected to the coding input of the coding and decoding unit 200, the signal input of each probe 10 is connected to the decoding output of the coding and decoding unit 200, the coding output of the coding and decoding unit 200 is connected to a control processing system 2, and the decoding input of the coding and decoding unit 200 is connected to the control processing system 2.

The coding and decoding unit 200 is used to decode the received probe control signal sent by the control processing system 2 and send the decoded probe control signal to the corresponding probe 10.

The probe 10 is used to operate and process the surface to be operated according to the received probe control signal, and send the obtained probe data signal to the coding and decoding unit 200 connected thereto.

The coding and decoding unit 200 is used to encode the probe data signal received from the probe 10 and send the encoded probe data signal to the control processing system 2.

In Mode three, a coding and decoding unit 20 is shared by all probes 10 in the probe device for data signal transmission processing, which can minimize the number of coding and decoding units 20 under the premise of ensuring the speed of data signal transmission processing and is suitable for application scenarios in which the number of probes is relatively small.

A third embodiment of the present application relates to a probe device, this embodiment relative to the second embodiment: this embodiment provides a specific structure of a probe as well as a coding and decoding unit in a probe device as well as a specific fixing method of the probe and the coding and decoding unit.

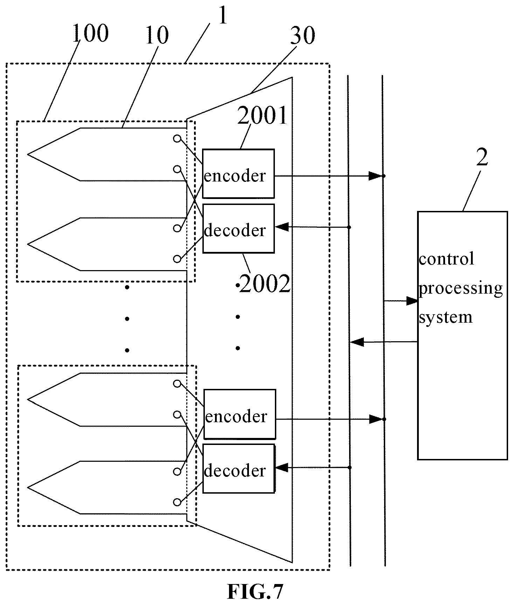

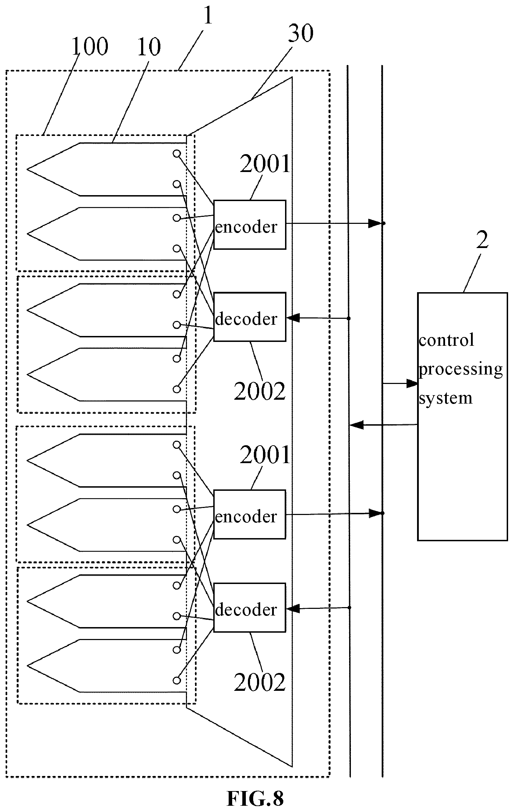

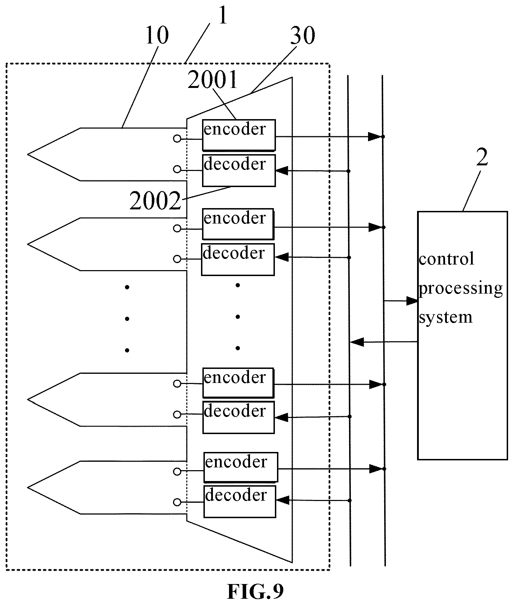

Referring to FIGS. 7 to 10, each coding and decoding unit 200 comprises: an encoder 2001 and a decoder 2002; an input of the encoder 2001 forms an encoding input of the coding and decoding unit 200, an output of the encoder 2001 forms an encoding output of the coding and decoding unit 200, an input of the decoder 2002 forms a decoding input of the coding and decoding unit 200, and an output of the decoder 2002 forms a decoding output of the coding and decoding unit 200.

The decoder 2002 is used to decode the received probe control signal sent by the control processing system 2 and send the decoded probe control signal to the connected probe 10. The probe 10 is used to operate and process the surface to be operated according to the received probe control signal and send the obtained probe data signal to the connected encoder 2001.

The encoder 2001 is used to encode the received probe data signal sent by the probe 10 and send the encoded probe data signal to the control processing system 2.

Exemplarily, in the coding and decoding unit 200, the encoder 2001 is a frequency-domain mixing device, and each probe has a corresponding mixing frequency, so that when the probe data signal of each probe 10 is received, the probe data signal of each probe 10 can be carried into the corresponding mixing frequency; similarly, the decoder 2002 in the coding and decoding unit 200 can remove the mixing frequency from the received probe control signal and restore the probe control signal of each probe.

Exemplarily, in the coding and decoding unit 200, the encoder 2001 is a time-domain allocation device, where each probe has a corresponding period, i.e., the time period is allocated to each probe 10 separately, and the encoder 2001 can then scan the probe data signals of the probes of each of the probes 10 in time and perform time-domain allocation. Similarly, the decoder 2002 in the coding and decoding unit 200 may then obtain the probe control signals for the corresponding time periods of the individual probes 10 by synchronizing the time periods of the probe control signals. Wherein, the encoder 2001 and the decoder 2002 in the coding and decoding unit 200 are synchronized by the same clock signal.

Exemplarily, the encoder 2001 of the coding and decoding unit 200 is provided with a feature identifier corresponding to each probe 10 to which it corresponds, the feature identifier being, for example, a feature code or a probe address, whereby the coding and decoding unit 20, upon encoding the probe data signal of each probe 10, adds the feature identifier corresponding to each probe 10 to the encoded probe data signal, allowing the control processing system 2 to identify the probe 10 to which the respective probe data signal belongs. Similarly, in the decoder 2002 of the coding and decoding unit 200, a feature identifier is also provided for each probe 10 corresponding thereto, the feature identifier being, for example, a feature code or a probe address, whereby the decoder 2002 can decode the probe control signal matched by the feature identifier and send it to the corresponding probe 10.

Exemplarily, the encoder 2001 and decoder 2002 in the coding and decoding unit 200 may include one or more of the following circuits or devices: a preamplifier, a filter, an analog-to-digital converter, a digital-to-analog converter, a shielding device, a temperature control device; wherein the shielding device is used to reduce signal interference between the encoder 2001 and the decoder 2002, and the temperature control device can control the temperature rise generated by the work of the encoder 2001 or the decoder 2002 to avoid affecting the temperature of the surrounding probes 10.

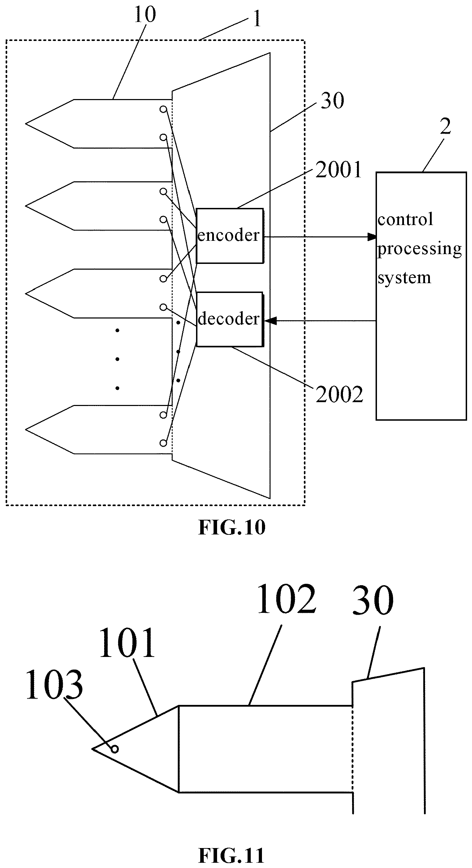

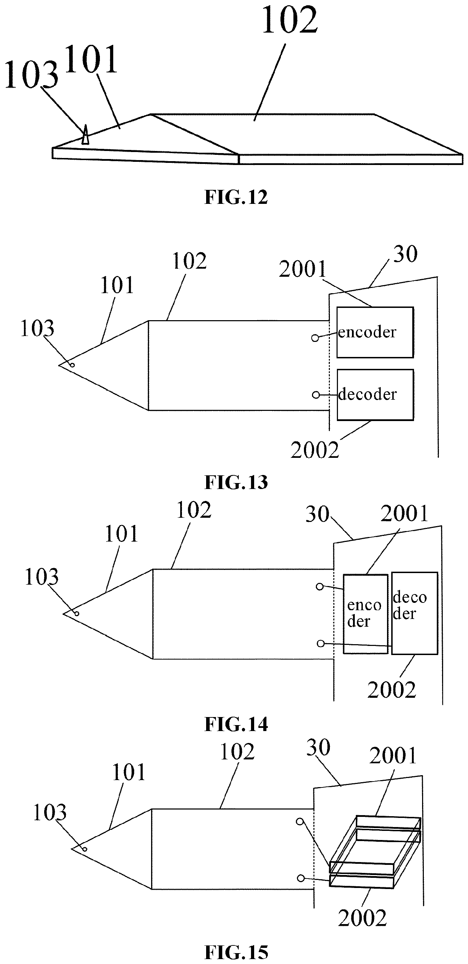

In this embodiment, referring to FIGS. 11 and 12, each probe 10 comprises: a probe head 101, a cantilever beam 102, and a probe tip 103, the probe tip 103 is provided on the tip portion of probe head 101, and in each of the probes 10, the probe head 101 is fixed to one end of the cantilever beam 102, the end of the cantilever beam 102 is integrally molded with the probe holder 30 (only part of the probe holder 30 is shown in the Figures), and the end of the cantilever beam 102 that is far away from the probe head 101 is connected to the input of the encoder 2001 and the output of the decoder 2002 respectively. When the probe 10 operates and processes the surface to be operated, the probe tip 103 of the probe 10 faces towards the surface to be operated, and the probe 10 controls the probe tip 103 to operate and process the surface to be operated according to the received probe control signals.

Exemplarily, referring to FIGS. 13 to 15, the number of coding and decoding units 200 is equal to the number of probes 10, and the coding and decoding units 200 correspond one-to-one with the probes 10; the encoder 2001 and the decoder 2002 in each coding and decoding unit 200 are fixed to the end of the cantilever beam 102 of the corresponding probe 10 that is away from the probe head 101, and are communicatively coupled to the cantilever beam 102, and the end of the cantilever beam 102 is integrally molded to the probe holder 30 (only part of the probe holder 30 is illustrated in the figures). In FIG. 13, the encoder 2001 and the decoder 2002 are arranged side by side in a vertical direction; in FIG. 14, the encoder 2001 and the decoder 2002 are arranged side by side in a horizontal direction; and in FIG. 15, the encoder 2001 and the decoder 2002 are arranged in a stacked fashion.

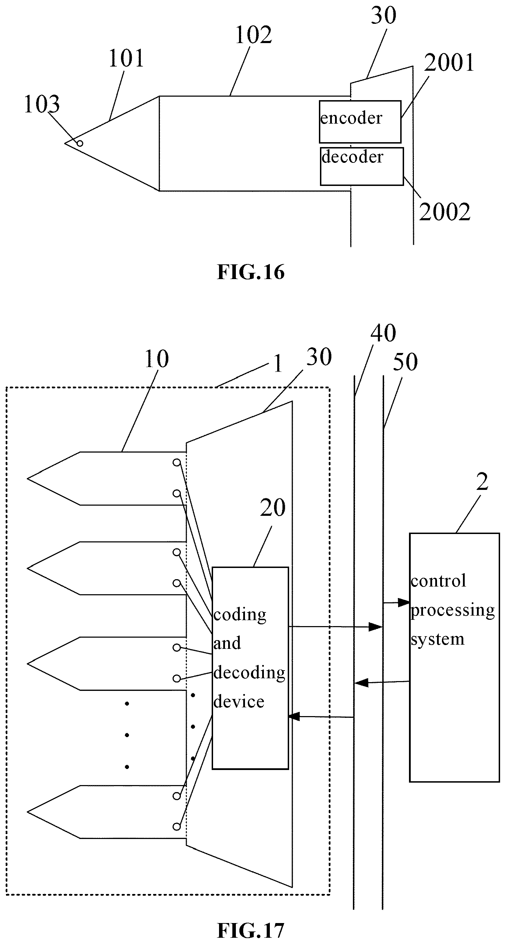

Exemplarily, referring to FIG. 16, the number of coding and decoding units 200 is equal to the number of probes 10, and the coding and decoding units 200 are one-to-one with the probes 10; the encoder 2001 and the decoder 2002 in each of the coding and decoding units 200 are integrated in the cantilever beam 102 of the corresponding probes 10 at the end away from the probe head and are communicatively connected to the cantilever beam 102.

A fourth embodiment of the present application relates to a probe device, compared to the first embodiment: in this embodiment a setting mode of the bus in the probe device is provided.

In one example, referring to FIG. 17, the probe device 1 further comprises: a first bus 40 and a second bus 50. The encoding output of the coding and decoding device 20 is connected to the control processing system 2 via the first bus 40, and the decoding input of the coding and decoding device 20 is connected to the control processing system via the second bus 50.

The coding and decoding device 20 is used to decode the probe control signals received from the control processing system 2 via the second bus, i.e., the control processing system 2 sends the probe control signals of all probes 10 to the coding and decoding device 20 of the probe device 1 by multiplexing the second bus 50 .

The coding and decoding device 20 is used to encode the probe data signal of each probe 10 and send the encoded probe data signal of each probe to the control processing system 2 via the first bus 40, i.e., the coding and decoding device 20 sends the encoded probe data signals of all probes 10 to the control processing system 2 by multiplexing the first bus 40 .

In this embodiment, the signal output of the probe 10 and the encoding input of the coding and decoding device 20 are connected by a plurality of wires, the plurality of wires are respectively used for transmitting a plurality of types of probe data signals, the plurality of types of probe data signals are respectively sent to the coding and decoding device 20 through the corresponding wires, and the coding and decoding device 20 respectively encodes the respective types of probe data signals and sends them to the control processing system 2 via the first bus 40. Similarly, the signal input of the probe 10 and the decoding output of the coding and decoding device 20 are connected via a plurality of wires, each of which is used for transmitting one type of probe control signal, and the control processing system 2 sends the multiple types of encoded probe control signals to the coding and decoding device 20 via the second bus 50, where the coding and decoding device 20 decodes the respective types of probe control signals and sends the respective types of decoded probe control signals via the plurality of wires to the corresponding probes 10.

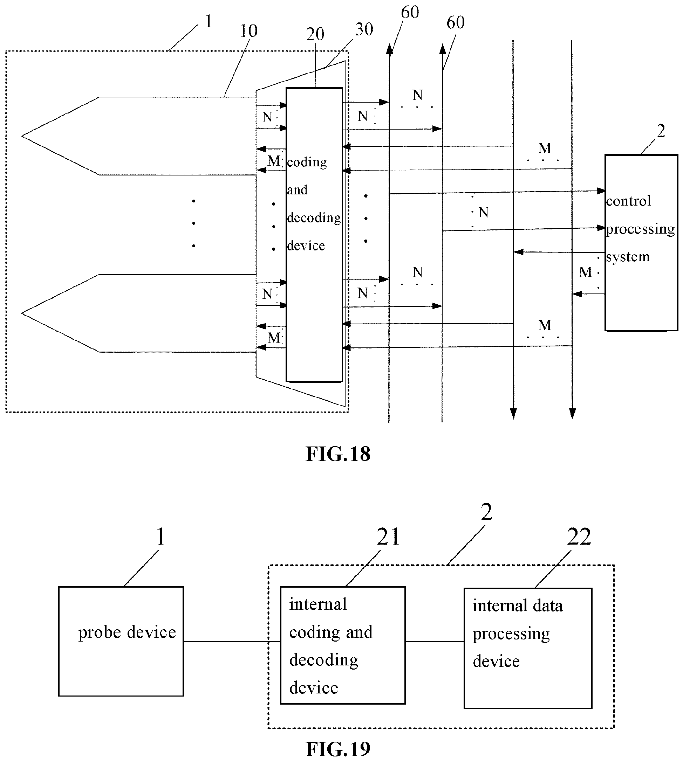

In one example, referring to FIG. 18, the probe device 1 further comprises: N third buses 60 and M fourth buses 70; N is an integer greater than 1 and M is an integer greater than 1.

The encoding output of the coding and decoding device 20 is connected to the control processing system 2 via the N third buses 60, and the decoding input of the coding and decoding device 20 is connected to the control processing system 2 via the M fourth buses 70; each probe control signal comprises M sub control signals, and the probe data signal of each probe comprises N sub data signals.

The coding and decoding device 20 is used to receive the M sub control signals through the M fourth buses 70 respectively, decode each sub control signal, and send the decoded M sub control signals to the corresponding probes 10.

The probes 10 are used to operate and process the surface to be operated according to each decoded sub control signal, and send the obtained N sub data signals to the coding and decoding device 20.

The coding and decoding device 20 is used to receive N sub data signals sent by the probe through the N third buses, encode the N sub data signals respectively, and send the encoded sub data signals to the control processing system 2 through the corresponding third buses 60, respectively.

In this embodiment, the probe data signal of the probe 10 comprises N sub-data signals, the signal output of the probe 10 and the encoding input of the coding and decoding device 20 are connected to each other via N wires, and the encoding output of the coding and decoding device 20 is connected to the control processing system 2 via N third buses 60; the N sub-data signals are respectively signals of different types, the N sub-data signals correspond one-to-one with N wires, the N sub-data signals of the probe 10 are respectively sent to the coding and decoding device 20 through the corresponding wires, the coding and decoding device 20 encodes the sub-data signals respectively, the N sub-data signals correspond one-to-one with the N third buses 60, and the coding and decoding device 20 sends the respective sub-data signals in the encoded data signals of the probe 10 to the control processing system 2 through the corresponding third buses 60.

Similarly, the signal input of each probe 10 is connected to the decoding output of the coding and decoding device 20 via M wires, and the decoding input of the coding and decoding device 20 is connected to the control processing system 2 via M fourth buses 70; the probe control signal includes M sub control signals, the M sub control signals correspond one-to-one with M fourth buses 70, the control processing system 2 sends the respective encoded sub control signals to the coding and decoding device 20 through the corresponding fourth buses 70, the M sub control signals correspond one-to-one with the M wires; the coding and decoding device 20 sends the M sub control signals in one decoded control signal to the corresponding probes 10 through the corresponding wires, respectively.

A fifth embodiment of the present application relates to a probe control equipment for controlling a probe device by means of a probe control system to operate and process the surface of a wafer to be operated, and outputting data processing results. Processing of the surface of the wafer to be operated includes measurement of physical and chemical quantities on the surface of the wafer to be operated, scanning probe lithography (SPL), generation of electrons, generation of photons, as well as the use of probes to introduce ions to the surface to be operated to generate electrons, photons, and guide the injection of ions. Wherein the related physical and chemical quantities include, but are not limited to, electrical information, mechanical information, magnetic information, optical information, acoustic information, and material composition, and so on, such as three-dimensional topography measurement, surface roughness measurement, surface conductivity measurement, surface material composition measurement, surface temperature measurement, surface hardness measurement, surface modulus measurement, surface emission measurement, surface luminescence measurement, and surface Raman signal measurement, etc.; scanning probe lithography is that the voltage (e.g., 50V) is applied to the probe, and a high electric field strength of the electric field is formed on the probe tip of the probe, at this time, the electrons on the probe tip can easily be pulled out, forming the electric field emission of the probe head of the probe, thus using the electrons emitted by the electric field formed on the probe tip of the probe to sense the photoresist to form a e-beam lithography,the electrons emitted by the probe can generate the secondary electrons on the surface to be operated.

In this embodiment, the probe control equipment comprises: a probe device of any one of the first to fourth embodiments, and a control processing system connected to the probe device. For example, taking the probe device as the probe device in the first embodiment, the probe control equipment is shown in FIG. 1.

The control processing system 2 is used to generate a probe control signal according to the control parameters input from the user side and send the probe control signal to the probe device 1.

The probe device 1 is used to decode the received probe control signal and control each probe 10 in the probe device 1 to operate the surface to be operated according to the decoded probe control signal to obtain the probe data signal.

The probe device 1 is also used to encode the probe data signal of each probe and send the encoded data signal of each probe to the control processing system 2.

The control processing system 2 is also used to operate and process the received encoded data signal of each probe and output the data processing results.

The present embodiment provides a probe control equipment including the probe device described above, in which, when operating and processing the surface to be operated, the control processing system sends the probe control signals to a coding and decoding device of the probe device, wherein the coding and decoding device decodes the received probe control signals and sends the decoded probe control signals to the corresponding probes respectively, the probes then operate and process the surface to be operated according to the received probe control signals, and sends the obtained probe data signals to the coding and decoding device, the coding and decoding device then encodes the probe data signals of the respective probes and sends the encoded probe data signals to the control processing system, realizing that multiple probes operate and process the surface to be operated in parallel, the coding and decoding device is incorporated into the probe device, so that the coding and decoding device can be utilized for high-speed transmission of data signals between the probe device and the control processing system using a bus, enabling the multi-probe probe device to perform a high-speed operation mode, which helps to improve the measurement and lithography speed of the probe device; at the same time, the number of lead wires between the probe device and the control processing system has been reduced, which makes the connection between the probe device and the control processing system simpler.

A sixth embodiment of the present application relates to a probe control equipment, compared to the fifth embodiment, this embodiment provides a specific structure of a control processing system.

Referring to FIG. 19, the control processing system 2 comprises: an internal coding and decoding device 21 and an internal data processing device 22. the internal coding and decoding device 21 is connected to the probe device 1, and the internal data processing device 22 is connected to the internal coding and decoding device 21.

The internal data processing device 22 is used to generate the probe control signals based on the control parameters input by the user side. Specifically, the internal data processing device 22 is used to generate the probe control signals of the repspective probes based on the control parameters after receiving the control parameters input by the user and send the probe control signals of the repspective probes to the internal coding and decoding device 21.

The internal coding and decoding device 21 are used to encode the probe control signal and send the encoded probe control signal to the probe device 1. Specifically, a feature identifier corresponding to each probe is provided in the internal coding and decoding device 21, and the internal coding and decoding device 21, when encoding the probe control signals of the repspective probes, adds the feature identifier of the probe to the encoded probe control signal and sends the encoded probe control signal to the probe device 1, and the coding and decoding device in the probe device 1, when decoding the received encoded probe control signal, based on the feature identifier of the probe control signal, identifies the probes to which the repspective probe control signals correspond and sends the decoded probe control signals of the repspective probes to the corresponding probes; subsequently, the coding and decoding device in the probe device 1 receives the probe data signals returned by the repspective probes, and when encoding the probe data signals of the repspective probes, adds the feature identifiers corresponding to the repspective probes to the encoded probe data signal , and sends the encoded probe data signals to the internal coding and decoding device 21 of the control processing system.

The internal coding and decoding device 21 is also used to decode the received probe data signals and send the decoded probe data signals to the internal data processing device 22. The internal coding and decoding device 21, when decoding the received probe data signals sent by the probe device 1, identifies the probe corresponding to the repspective probe data signals based on the feature identifiers in the probe data signals and sends the decoded probe data signals to the internal data processing device 22.

The internal data processing device 22 is also used to operate and process the decoded probe data signals and output the data processing result. Specifically, the internal data processing device 22 operates and process the probe data signals of the repspective probes to obtain a desired data processing result, the data processing result being, for example, three-dimensional height information, a coordinate position map, etc.

A seventh embodiment of the present application relates to a probe control device, compared to the sixth embodiment: this embodiment provides a specific structure of an internal data processing device 22.

In this embodiment, the internal data processing device comprises a processing unit in an L-layer structure; a first layer of the internal data processing device comprises a plurality of processing units, a Lth layer comprises a processing unit, and each processing unit in the current layer is correspondingly connected to a plurality of processing units in the next layer; and the internal coding and decoding device comprises a plurality of internal coding and decoding units, and the internal coding and decoding units are connected in one-to-one correspondence with the first processing unit; each said processing unit in the first layer corresponds to at least one probe in said probe device, L is an integer greater than 1; the internal data processing device is used to generate probe control signals of the repspective probes by receiving a control parameter input by the user side through the processing unit in the Lth layer; the internal data processing unit is used to send the probe control signals of the repspective probes to the processing unit of the first layer based on the processing uni in the L-layer structure, and to the corresponding probes in the probe device via the repspective internal coding and decoding units; the internal data processing unit is used to receive the probe data signals of the corresponding probes via the repspective internal coding and decoding units; the internal data processing unit is used to process the probe datas of the probes based on the processing unit in the L-layer structure, and output a data processing result via the processing unit of the Lth layer.

It is to be noted that in each layer of the internal data processing device, when the processing unit in this layer processes the received probe data signals (which may be the probe data signals processed by the processing unit in the previous layer or the probe data signals originating from the internal coding and decoding device) , the processed probe data signals may also be outputted to an external device connected with the probe control system through the lead wire to be further processed by the external device, for example, the external device is a desktop mainframe computer, a laptop computer, and the like.

The following is an example of an internal data processing device including a processing unit with a three-layer structure.

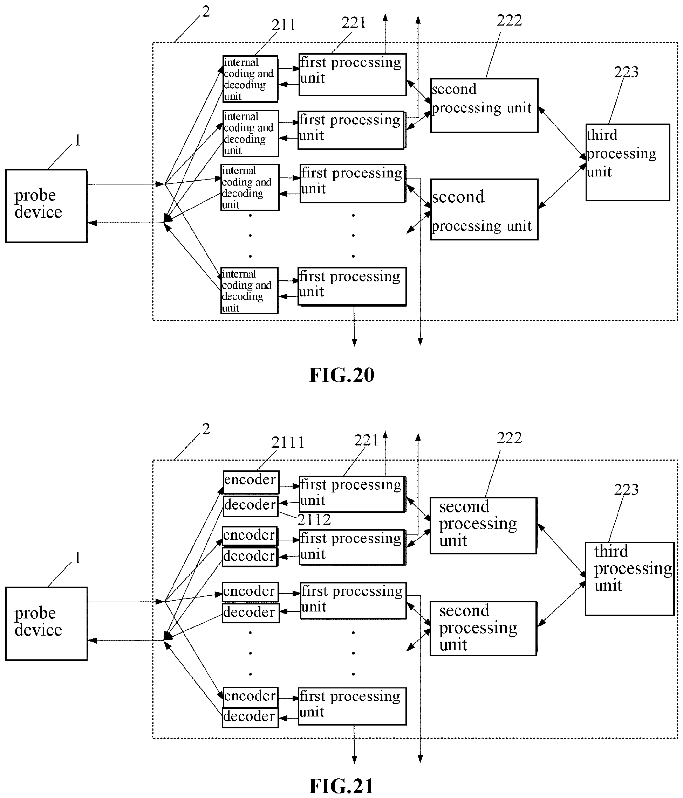

Referring to FIG. 20, the first layer of the internal data processing device 21 includes a plurality of first processing units 221, the second layer includes a plurality of second processing units 222, the third layer includes one third processing unit 223, and the internal coding and decoding device 21 includes a plurality of internal coding and decoding units 211.

The third processing unit 223 is connected to each of the second processing units 222, the second processing units 222 corresponds to a plurality of first processing units 221, each of the first processing units 221 corresponds to one second processing unit 222, the first processing units 221 is connected to the corresponding second processing units 222; the internal coding and decoding units 211 are connected in one-to-one correspondence with the first processing units 221, each of the internal coding and decoding units 211 is connected to a coding and decoding device in the probe device 1, and if the coding and decoding device in the probe device 1 comprises a plurality of coding and decoding units, the plurality of the internal coding and decoding units 211 are connected in one-to-one correspondence with the plurality of coding and decoding units in the probe device 1; each first processing unit 221 corresponds to at least one probe in the probe device 1, i.e. the internal coding and decoding unit 211 connected to the first processing unit 221 corresponds to at least one probe in the probe device 1.

The third processing unit 223 is used to generate a probe control signal based on the control parameters input from the user side and send it to each target processing unit via each second processing unit 222; the target processing unit is a first processing unit corresponding to the second processing unit 222. Specifically, the third processing unit 223, as a top-level master control unit, is used to generate probe control signals of the respective probes based on the control parameters after receiving the control parameters input from the user side, and send the probe control signals of the respective probes to the corresponding second processing unit 222, which then sends the received probe control signals of the respective probes to the corresponding first processing unit 221. Wherein the probes corresponding to the second processing unit 222 comprise: all probes corresponding to a plurality of first processing units 221 connected thereto.

The first processing unit 221 is used to send the received control signal of each probe to the corresponding probe in the probe device 1 via the corresponding internal coding and decoding unit 211. The first processing unit 221, after receiving the probe control signals sent by the second processing unit 222, sends the probe control signals to the corresponding internal coding and decoding unit 211, the internal coding and decoding unit 211 is provided with a feature identifier corresponding to each probe, the internal coding and decoding unit 211 encodes the probe control signals of the probes, adds the feature identifiers of the probes to the encoded probe control signals, and sends the encoded probe control signal to the probe device 1, the coding and decoding unit in the probe device 1, when decoding the encoded probe control signals, identifies the probes corresponding to the respective probe control signals based on the feature identifiers of the probe control signals, and sends the decoded control signals of the respective probes to the corresponding probes; subsequently, the coding and decoding unit in the probe device 1 receives the probe data signals returned by the respective probes, and when encoding the probe data signals of the respective probes, adds the feature identifiers corresponding to the respective probes to the encoded probe data signals, and sends the encoded probe data signals to the corresponding internal coding and decoding unit 211, the internal coding and decoding unit 211 decodes the probe data signals of the probes, and sends the decoded probe data signals to the first processing unit 221.

The first processing unit 221 is also used to operate and process the probe data signal of the corresponding probe received through the corresponding internal coding and decoding unit 211, and to send the obtained processing result to the third processing unit 223 through the second processing unit 222. Specifically, the first processing unit 221, after receiving the decoded probe data signals of the corresponding probes, sends the processing result after the processing of the probe data signal to the second processing unit 222, and the second processing unit 222 sends the further processed processing result to the third processing unit 223.

The third processing unit 223 is used to output data processing results based on the processing results corresponding to the received probe data signals of the respective probes. Specifically, the third processing unit 223 obtains data processing results and outputs the data processing results based on summarizing the processing results of the probe data signals of the respective probes, and the data processing results are, for example, three-dimensional height information, coordinate position maps, etc., and the data processing results are, for example, three-dimensional height information, coordinate position maps, etc.

It should be noted that the internal coding and decoding unit 211 in this embodiment may refer to the coding and decoding unit 200 in the probe device 1 in the third embodiment, as shown in FIG. 21, and each of the internal coding and decoding units 211 comprises: an encoder 2111 and a decoder 2112, and the specific functions of the encoder 2111 and the decoder 2112 will not be further described herein.

In this embodiment, a multi-layer structure is provided in the internal data processing device, wherein a plurality of second processing units are controlled by a third processing unit to carry out arithmetic and data transmission, and then each second processing unit controls a plurality of third processing units to carry out arithmetic and data transmission, respectively, so as to enhance the arithmetic speed and signal transmission speed of the internal data processing device.

An eighth embodiment of the present application relates to a probe control method applied to the probe control equipment of any one of the fifth to seventh embodiments, the probe control equipment comprising a probe device, and a control processing system connected to the probe device, capable of utilizing the probe control system to control the probe device to operate and process the surface of the wafer to be operated, and to output data processing results.

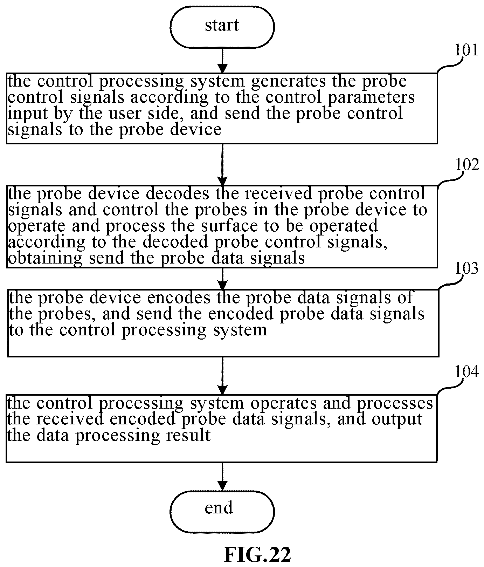

The specific flow of the probe control method of this embodiment is shown in FIG. 22.

Step 101, the control processing system generates probe control signals based on the control parameters input from the user side and sends the probe control signals to the probe device.

Step 102, the probe device decodes the received probe control signals and controls each probe in the probe device to operate the surface to be operated according to the decoded probe control signals to obtain the probe data signals.

Step 103, the probe device encodes the respective probe data signals and sends the respective encoded probe data signals to the control processing system.

Step 104, the control processing system operates the respective received encoded probe data signals and outputs the data processing results.

In this embodiment, when operating and processing the surface to be operated, the control processing system sends the probe control signals to the coding and decoding device of the probe device, the coding and decoding device decodes the received probe control signals and sends the decoded probe control signals to the corresponding probes, respectively, the probes then operate and process the surface to be operated according to the received probe control signal and sends the obtained probe data signal to the coding and decoding device, the coding and decoding device then encodes the probe data signals of the respective probes and sends the encoded probe data signals to the control processing system, realizing that multiple probes operate and process the surface to be operated in parallel, the coding and decoding device is incorporated into the probe device, so that the coding and decoding device can be utilized for high-speed transmission of data signals between the probe device and the control and processing system using a bus, which enables the probe device with multiple probes to perform high-speed operation mode, and helps to improve the measurement and lithography speed of the probe device; at the same time, the number of lead wires between the probe device and the control processing system is reduced, making the connection between the probe device and the control processing system simpler.

The preferred embodiments of the present application have been described in detail above, but it is to be understood that aspects of the embodiments can be modified, if desired, to employ aspects, features and concepts from various patents, applications and publications to provide additional embodiments.

These and other variations to the embodiments can be made in view of the detailed description above. In the claims, the terms used should not be considered as limiting the specific embodiments disclosed in the specification and claims but should be understood to include all possible embodiments together with the full scope of equivalents enjoyed by those claims.

## Claims

1. A probe device, **characterized in that** it comprises: a plurality of probes, a coding and decoding device; signal outputs of the probes are connected to coding inputs of the coding and decoding device, respectively, signal inputs of the probes are connected to decoding outputs of the coding and decoding device, respectively, and the coding outputs and the decoding inputs of the coding and decoding device are connected to a control processing system;
the coding and decoding device is used to decode the probe control signals received from the control processing system and send the decoded probe control signals to the corresponding probes respectively;
the probes are used to operate and process a surface to be operated according to the received probe control signals and send obtained probe data signals to the coding and decoding device;
the coding and decoding device is further used to encode the probe data signals of the probes and send the encoded data signals of the probes to the control processing system.

2. The probe device according to claim 1, **characterized in that** the coding and decoding device comprises: a plurality of coding and decoding units; the plurality of probes form a plurality of probe surface operating units, each of the probe surface operating units comprises at least one of the probes, and each of the probe surface operating units is corresponding to one of the coding and decoding units;
the signal outputs of the probes in the probe surface operating units are connected to encoding inputs of the corresponding coding and decoding units, the signal inputs of the probes in the probe operating units are connected to decoding outputs of the corresponding coding and decoding units, the encoding outputs of the coding and decoding units are connected to the control processing system, and the decoding inputs of the coding and decoding units are connected to the control processing system;
the coding and decoding units are used to decode the received probe control signals sent by the control processing system and send the decoded probe control signals to the probes of the corresponding probe operating units;
the probes are used to operate and process the surface to be operated according to the received probe control signals and send the obtained probe data signals to the encoding and decoding units connected thereto;
the coding and decoding units are further used to encode the received probe data signals sent by the probes and send the encoded probe data signals to the control processing system.

3. The probe device according to claim 1, **characterized in that** the coding and decoding device comprises a plurality of coding and decoding units, the number of the coding and decoding units being equal to the number of the probes, the coding and decoding units correspond one-to-one with the probes;
the signal outputs of the probes are connected to encoding inputs of the corresponding coding and decoding units, the signal inputs of the probes are connected to decoding outputs of the corresponding coding and decoding units, the encoding outputs of the coding and decoding units are connected to the control processing system, and the decoding inputs of the coding and decoding units are connected to the control processing system;
the coding and decoding units are used to decode the received probe control signals sent by the control processing system and send the decoded probe control signals to the probes connected thereto;
the probes are used to operate and process the surface to be operated according to the received probe control signals and send the obtained probe data signals to the coding and decoding units connected thereto;
the coding and decoding units are used to encode the received probe data signals sent by the probes and send the encoded probe data signals to the control processing system.

4. The probe device according to claim 1, **characterized in that** the coding and decoding device comprises a coding and decoding unit; the signal outputs of the probes are each connected to encoding inputs of the coding and decoding unit, the signal inputs of the probes are each connected to decoding outputs of the coding and decoding unit, the encoding outputs of the coding and decoding unit are connected to the control processing system, and the decoding inputs of the coding and decoding unit are connected to the control processing system;
the coding and decoding unit is used to decode the received probe control signals sent by the control processing system and send the decoded probe control signals to the corresponding probes;
the probes are used to operate and process the surface to be operated according to the received probe control signals and send the obtained probe data signals to the coding and decoding unit connected thereto;
the coding and decoding unit are used to encode the received probe data signals sent by the probes and send the encoded probe data signals to the control processing system.

5. The probe device according to any one of claims 2 to 4, **characterized in that** each the coding and decoding unit comprises: an encoder and a decoder; an input of the encoder forms the encoding input of the coding and decoding unit, an output of the encoder forms the encoding output of the coding and decoding unit, an input of the decoder forms the decoding input of the coding and decoding unit, an output of the decoder forms the decoding output of the coding and decoding unit;
the decoder is used to decode the received probe control signals sent by the control processing system and send the decoded probe control signals to the probes connected thereto;
the probes are used to operate and process the surface to be operated according to the received probe control signals and send the obtained probe data signals to the encoder connected thereto;
the encoder is used to encode the received probe data signals sent by the probe and send the encoded probe data signal to the control processing system.

6. The probe device according to claim 5, **characterized in that** each of the probes comprises: a probe head, a cantilever beam, and a probe tip, in each of the probes, the probe tip is provided on a tip portion of the probe head, the probe head is fixed to one end of the cantilever beam, an end of the cantilever beam away from the probe head is connected to the input of the encoder and the output of the decoder, respectively;
the probe is used to control the probe tip to operate and process the surface to be operated according to the received probe control signals.

7. The probe device according to claim 6, **characterized in that** the number of the coding and decoding units is equal to the number of the probes, the coding and decoding units correspond one-to-one with the probes; the encoder and the decoder in each of the coding and decoding units is fixed to the end of the cantilever beam away from the probe head of the corresponding probes and is communicatively connected to the cantilever beam.

8. The probe device according to claim 6, **characterized in that** the number of the coding and decoding units is equal to the number of the probes, the coding and decoding units correspond one-to-one with the probes; the encoder and the decoder in each of the coding and decoding units are integrated at the end of the cantilever beam of the corresponding probes away from the probe head, and communicatively connected to the cantilever beam.

9. The probe device according to claim 1, **characterized in that** the probes operate and process the surface to be operated in a manner comprising any one or any combination of the following:
measuring of physical and chemical quantities of the surface to be operated, photoetching of emitted electrons of the surface to be operated, generation of electrons, generation of photons, ion implantation of the surface to be operated.

10. The probe device according to claim 1, **characterized in that** the probe device further comprises: a first bus and a second bus; the encoding output of the coding and decoding device is connected to the control processing system via the first bus, and the decoding input of the coding and decoding device is connected to the control processing system via the second bus;
the encoding and decoding device is used to decode the probe control signals sent by the control processing system received via the second bus;
the coding and decoding device is used to encode the probe data signals of the probes and send the encoded data signals of the probes to the control processing system via the first bus.

11. The probe device according to claim 1, **characterized in that** the probe device further comprises: N third buses and M fourth buses; N is an integer greater than 1, M is an integer greater than 1;
the encoding output of the coding and decoding device is connected to the control processing system via the N third buses, and the decoding input of the coding and decoding device is connected to the control processing system via the M fourth buses; each of the probe control signals comprises M sub control signals, and each of the probe data signals of the probes comprises N sub data signals;
the coding and decoding device is used to receive the M sub control signals through the M fourth buses respectively, decode the sub control signals, and send the decoded M sub control signals to the corresponding probes;
the probe is used to operate and process the surface to be operated according to the decoded sub control signals and send the obtained N sub data signals to the coding and decoding device;
the coding and decoding device is used to receive the N sub data signals sent by the probe via the N third buses, encode the N sub data signals, and send the encoded sub data signals to the control processing system via the corresponding third buses, respectively.

12. The probe device according to claim 1, **characterized in that** the probe device further comprises: a probe holder; the plurality of probes are disposed on the probe holder, the coding and decoding device is fixed to the probe holder or the ends of the probes.

13. The probe device according to claim 12, **characterized in that** the coding and decoding device is formed by microfabrication on the probe holder or the ends of the probes.

14. A probe control equipment, **characterized in that** it comprises: a probe device according to any one of claims 1 to 13, and a control processing system connected to the probe device;
the control processing system is used to generate probe control signals according to control parameters input from a user side and send the probe control signals to the probe device;
the probe device is used to decode the probe control signals received and control the probes in the probe device to operate and process the surface to be operated according to the encoded probe control signal, to obtain the probe data signals;
the probe device is further used to encode the probe data signals of the probes and send the encoded data signals of the probes to the control processing system;
the control processing system is further used to operate and process the received encoded probe data signals and output data processing results.

15. The probe control equipment according to claim 14, **characterized in that** the control processing system comprises: an internal coding and decoding device and an internal data processing device; the coding and decoding device is connected to the probe device, the internal data processing device is connected to the coding and decoding device;
the internal data processing device is used to generate the probe control signals according to the control parameters input from the user side;
the internal coding and decoding device is used to encode the probe control signals and send the encoded probe control signals to the probe device;
the internal coding and decoding device is further used to decode the received probe data signals and send the decoded probe data signals to the internal data processing device;
the internal data processing device is further used to operate an process the decoded probe data signals and output the data processing results.

16. The probe control equipment according to claim 15, **characterized in that** the internal data processing device comprises a processing unit of a L-layer structure; a first layer of the internal data processing device comprises a plurality of processing units, and a layer L comprises one processing unit, and each processing unit in the current layer is correspondingly connected to a plurality of processing units in the next layer; the internal coding and decoding device comprises a plurality of internal coding and decoding units, the internal coding and decoding units is connected one-to-one with the first processing unit; the processing unit in the first layer corresponds to at least one probe of the probe device, L is an integer greater than 1;
the internal data processing unit is used to generate probe control signals of the probes by receiving the control parameters input by the user side via the processing unit in layer L;
the internal data processing unit is used to send the probe control signals of the probes to the processing unit of the first layer based on the processing unit of the L-layer structure and to the corresponding probes in the probe device via the internal encoding and decoding unit;
the internal data processing unit is used to receive the probe data signals of the corresponding probes via the internal encoding and decoding unit;
the internal data processing device is used to operate and process the probe data of the probes based on the processing unit of the L-layer structure and output the data processing results via the processing unit of the layer L.

17. The probe control equipment according to claim 16, **characterized in that** the internal data processing device comprises a processing unit of a three-layer structure; a first layer of the internal data processing device comprises a plurality of first processing units, a second layer comprises a plurality of second processing units, and a third layer comprises a third processing unit; the internal coding and decoding unit is connected one-to-one with the first processing units; each of the first processing units corresponds to at least one of the probes in the probe device;
the third processing units are used to generate the probe control signals based on the control parameters input from the user side, and send to target processing units via the second processing units; the target processing units are the first processing units corresponding to the second processing units;
the first processing units are used to send the received control signals of the probes to the corresponding probes in the probe device via the corresponding internal coding and decoding unit;
the first processing units are further used to operate and process the probe data signals received from the corresponding probe via the corresponding internal coding and decoding unit, and send the obtained processing results to the third processing units via the second processing units;
the third processing units are used to output the data processing results based on the received processing results corresponding to the probe data signals.

18. A control method of probe, **characterized in that** it is applied to a probe control equipment, the probe control equipment comprises a probe device, and a control processing system connected to the probe device; the method comprises:
the control processing system generates probe control signals based on control parameters input from a user side and sends the probe control signals to the probe device;
the probe device decodes the received probe control signals, and controls probes in the probe device to operate and process a surface to be operated according to the decoded probe control signals, and obtains probe data signals;
the probe device encodes the probe data signals of the probes and sends the encoded data signals of the probes to the control processing system;
the control processing system operates and processes the encoded probe data signals received and outputs data processing results.
